# FASCICULE DE BREVET EUROPEEN

(11) **EP 1 920 881 B1**
(45) Date de publication et mention de la délivrance du brevet: **06.01.2010**
(21) Numéro de dépôt: 07291327.0
(22) Date de dépôt: 06.11.2007
(51) Int. Cl.: B23Q 7/03, B65G 17/06, F16G 13/18

(54) **Plaque intérieure d'un maillon de chaîne permettant de bloquer les axes de la chaîne**
Innere Lasche eines Kettengliedes zur Blockierung der Kettenbolzen
Inner plate of a chain link for blocking the pins of the chain

(30) Priorité: 10.11.2006 FR 0609835
(43) Date de publication de la demande: 14.05.2008
(73) Titulaire: Sedis, 10003 Troyes Cedex (FR)
(72) Inventeur: Darbeida, Abdelhamid, 10180 Saint-Lyé (FR); Lauzet, Denis, 25580 Fallerans (FR)
(74) Mandataire: Debay, Yves

(56) Documents cités:
- EP-A- 0 316 238
- DE-C1- 3 408 295

## Description

### DOMAINE TECHNIQUE DE L'INVENTION

La présente invention se rapporte au domaine des convoyeurs à chaîne. L'invention concerne plus particulièrement une plaque intérieure d'un maillon de chaîne permettant, par un serrage, de bloquer les axes de la chaîne, ainsi qu'une chaîne de convoyage doté de telles plaques intérieures. L'invention concerne également un procédé de blocage des axes d'une chaîne.

### ARRIERE-PLAN TECHNOLOGIQUE DE L'INVENTLON

Il est connu dans l'état de la technique des chaînes de convoyage composées de maillons qui eux-mêmes sont constitués de plaques métalliques percées, intérieures et extérieures. Ces plaques sont en général parallèles. La ou les plaques intérieures sont traversées par deux rouleaux. Une plaque horizontale est fixée sur le dessus de la chaîne pour permettre de supporter les objets à convoyer. Les deux plaques extérieures sont assemblées avec les plaques intérieures à l'aide des rouleaux ; et de galets extérieurs. Ces galets sont placés généralement sur des roulements à bille lors des opérations de convoyage. Deux plaques adjacentes (intérieures et extérieures) sont reliées et articulées entre elles par l'intermédiaire des axes, l'articulation étant permise selon un plan déterminé.

Un inconvénient des chaînes de convoyage existantes est une usure précoce en raison notamment des torsions exercées sur chacun des maillons de la chaîne. Cela se produit lorsque la sollicitation résultant de la charge à transporter s'exerce de façon décalée par rapport à l'axe de déplacement de la chaîne. Le poids souvent élevé des objets à transporter, par exemple dans la sidérurgie ou dans diverses usines de fabrication automobile, aéronautique, diminue d'autant la durée de vie des chaînes de convoyage.

Le document DE3408295 décrit une chaîne en matériau non-métallique composé maillons de chaîne en forme de plaque liés entre eux par des boulons de façon à ce qu'au niveau de chaque boulon au moins trois maillons soient liés entre eux. Les deux maillons extérieurs sont fixés en rotation au boulon alors que le maillon intérieur est monté rotatif sur le boulon. Les deux maillons extérieurs sont fixés en rotation au boulon pour éviter d'avoir un trop grand nombre de degrés de liberté entre les maillons et les boulons qui peuvent fragiliser la chaîne. Cependant, les deux maillons extérieurs sont fixés à l'aide de goupilles mais qui n'empêchent pas les torsions latérales néfastes à la longévité de la chaîne. Il existe donc un besoin pour des chaînes de plus grande longévité pour ce type d'application.

### DESCRIPTION GENERALE DE L'INVENTION

La présente invention a donc pour objet de pallier un ou plusieurs des inconvénients de l'art antérieur en proposant une plaque intérieure d'un maillon de chaîne qui permet d'améliorer la résistance aux sollicitations exercées sur la chaîne lors du fonctionnement d'un convoyeur à chaîne.

A cet effet, l'invention concerne une plaque intérieure d'un maillon de chaîne selon la revendication 1.

Ainsi, il est permis de solidariser les rouleaux et la plaque intérieure à la manière d'un bloc (les charges supportées sont donc mieux réparties).

Les revendications dépendantes 2 à 9 présentent d'autres caractéristiques techniques selon certains modes de réalisation de l'invention.

Ainsi, la conception de la plaque intérieure reste bien adaptée pour soutenir, par le bord supérieur, des charges importantes lors d'un convoyage. Une plaque (généralement horizontale) de support de charge peut en effet être soudée au bord supérieur de la plaque intérieure.

Un objectif supplémentaire de l'invention est de proposer une chaîne de convoyage résistante dans la durée, supportant bien les mauvaises répartitions de charge.

A cet effet, l'invention concerne une chaîne de convoyage selon la revendication 10.

La revendication 11 présente d'autres caractéristiques techniques de la chaîne de convoyage.

Il est proposé en outre une utilisation dans une chaîne, dans le même but, de plaques intérieures selon la revendication 13.

Les revendications 14 à 15 présentent d'autres caractéristiques techniques de l'utilisation dans une chaîne de plaques intérieures.

Un objectif supplémentaire de l'invention est de proposer un procédé de fabrication de maillons de chaîne permettant d'améliorer la durée de vie de la chaîne pour des applications de convoyage de charges élevées.

A cet effet, l'invention concerne un procédé de fabrication d'un maillon d'une chaîne de convoyage selon la revendication 12.

L'invention, avec ses caractéristiques et avantages, ressortira plus clairement à la lecture de la description faite en référence aux dessins annexés dans lesquels :
- la figure 1 illustre dans une vue en coupe longitudinale une pièce intérieure d'un maillon de chaîne selon un premier mode de réalisation de l'invention ;
- la figure 2 représente une vue en coupe transversale d'une chaîne selon un mode de réalisation de l'invention ;
- la figure 3 montre une vue en coupe longitudinale d'un second mode de réalisation d'une plaque intérieure conforme à l'invention ;
- la figure 4 représente une vue de dessous de la plaque intérieure dans une chaîne de convoyage.

### DESCRIPTION DES MODES DE REALISATION PREFERES DE L'INVENTION

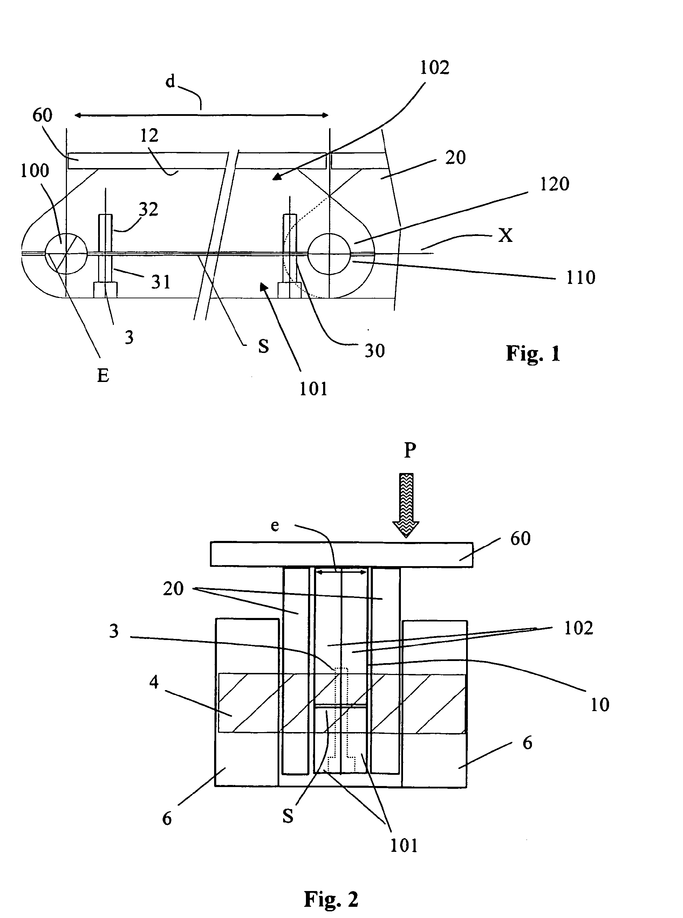

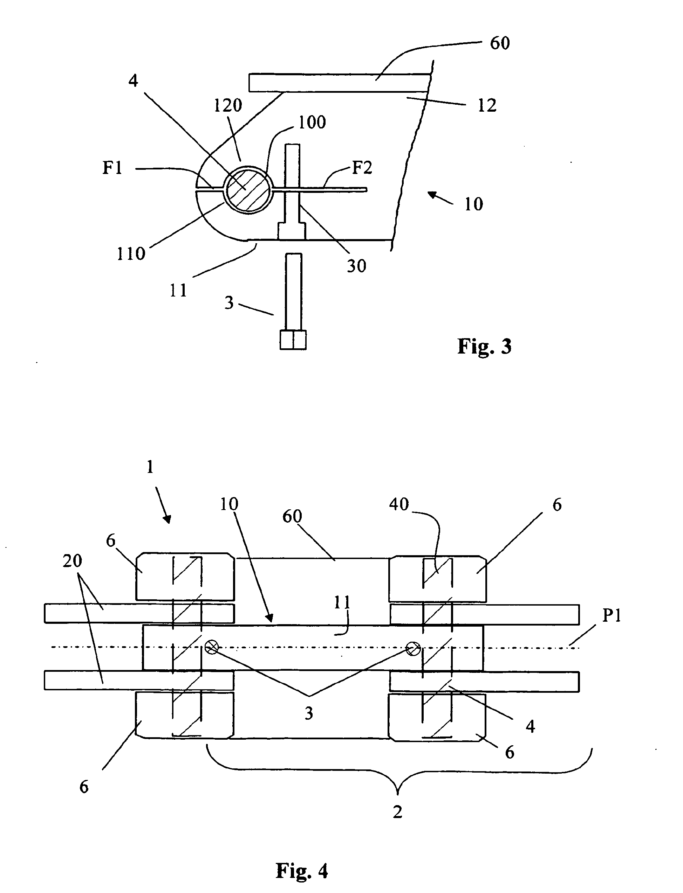

En référence aux figures 1 et 4, la chaîne de convoyage (1) comprend une succession de maillons (2) comprenant chacun des plaques (10, 20) s'étendant parallèlement à un plan (P1) dit longitudinal. Chaque maillon (2) comporte par exemple une ou deux plaque(s) intérieure(s) (10) et deux plaques extérieures (20) articulées par rapport à la plaque intérieure (10) suivant le plan (P1) longitudinal, par l'intermédiaire de rouleaux (4). Dans ce qui suit, on appellera rouleau (4) tout corps creux ou plein, monobloc ou non, formant un organe de liaison suivant un axe d'articulation. Dans un mode de réalisation préféré de l'invention, la plaque intérieure (10) du maillon comprend un bord inférieur (11), deux orifices (100) transversaux dit avant et arrière, parallèles entre eux, pour laisser passer chacun un rouleau (4) et un bord supérieur (12). L'épaisseur (e) formée par la ou les plaque(s) intérieure(s) (10) insérée(s) entre deux plaques extérieures (20) est par exemple constante et supérieure à celle de chacune des plaques extérieures (20). Les rouleaux (4) sont montés traversant de part et d'autre de la plaque intérieure (10). Des parois en vis-à-vis sont prévues dans la plaque intérieure (10) de part et d'autre d'un axe (X) qui est orthogonal aux orifices (100). Cet axe (X) est préférentiellement longitudinal et joint fictivement lesdits orifices (100), comme illustré à la figure 1. Ces parois comprennent notamment le pourtour des orifices (100) ainsi qu'une ou plusieurs parois adjacentes.

Chaque maillon (2) peut comprendre avantageusement des moyens d'encastrement (3, F1, 100, F2) des rouleaux (4) au niveau de la plaque intérieure (10). Pour que les rouleaux (4) soient bien positionnés puis engagés sans jeu avec la pièce intérieure (10), il est prévu d'abord d'insérer les rouleaux (4) dans les orifices (100) transversaux de la plaque intérieure (10). L'étape (E) d'encastrement de ces rouleaux (4) réalisé ensuite. Pour cela, une partie (110) inférieure et une partie (120) supérieure de la plaque intérieure (10), séparées entre elles, sont resserrées autour des rouleaux (4), à l'aide d'au moins une liaison interne dans la plaque intérieure (10). La zone de séparation (S) où s'exerce le serrage est indiquée dans les figures 1 et 2. Dans l'exemple de la figure 1, des organes de blocage (3) sont prévus pour permettre, par vissage ou action analogue, de resserrer les parties inférieure et supérieure (110, 120) de la plaque intérieure (10). Les moyens d'encastrement (3, F1, 100, F2) pour parvenir à supprimer tout jeu entre les rouleaux (4) et la pièce intérieure (10) prévoient deux vis de blocage dans le cas de la figure 1. Des systèmes à écrou, pion(s) ou ancrage équivalent peuvent être utilisés comme l'appréciera l'homme du métier. Chacun des organes de blocage (3) est disposé à proximité de l'orifice (100), de préférence à l'opposé de l'extrémité avant ou arrière de la pièce intérieure (10). Les organes de blocage (3) s'étendent selon une direction à composante perpendiculaire à l'axe longitudinal (X) du maillon (2). Ils exercent une action de resserrement autour des rouleaux (4), entre la partie (110) inférieure et la partie (120) supérieure de la plaque intérieure (10). La plaque intérieure (10) ne peut donc plus tourner ou se translater par rapport aux rouleaux (4) encastrés. Chacune des plaques extérieures (20) est en revanche mobile en rotation par rapport aux rouleaux (4).

On comprend que l'encastrement (E) des rouleaux (4) est réalisé par un rapprochement progressif des parois en vis-à-vis prévues dans la plaque intérieure (10), au niveau du pourtour des orifices (100). Chacune des vis de blocage (3) peut être vissée dans un écrou solidaire de la partie inférieure (110) et la forme du filetage prévu dans la plaque intérieure (10) permet à la vis d'exercer une force de rapprochement entre chacune des parties inférieure et supérieure (110, 120).

Dans un mode de réalisation de l'invention, chaque organe de blocage (3) est reçu dans un évidement (30) se décomposant en un perçage (31) situé dans la partie (110) inférieure et un fond (32) formé par un trou borgne de la partie (120) supérieure. Chacun des évidements (30) est disposé dans une zone située entre les deux orifices (100). Le trou borgne comprend un filetage pour retenir l'organe de blocage (3). Le perçage de la partie inférieure (110) peut comporter un alésage de petit diamètre et un épaulement de plus grand diamètre au niveau du bord inférieur (11). Un écrou est par exemple placé dans l'épaulement et une vis de blocage associée à l'écrou peut être insérée dans le filetage du fond (32) pour permettre l'encastrement du rouleau (4) correspondant. L'écrou peut être naturellement remplacé par l'utilisation d'un filetage dans l'alésage de petit diamètre de la partie inférieure (110)

Dans le mode de réalisation des figures 1 et 2, la pièce intérieure (10) se décompose en deux parties (101, 102) reliées entre elles par deux organes de blocage (3). A titre d'exemple non limitatif, les deux parties (101, 102) se rejoignent l'une et l'autre selon un plan parallèle aux orifices (100). La jonction entre les deux parties (101, 102) de la pièce peut ainsi s'effectuer suivant un plan médian pour les deux orifices (100), parallèlement aux bords inférieur et supérieur (11, 12). Les rouleaux (4) sont placés entre les deux parties (101, 102) dont le serrage provoque l'encastrement (E) des rouleaux (4). La conception en deux parties (101, 102) peut naturellement varier de l'exemple non limitatif des figures 1 et 2.

Dans le mode de réalisation de la figure 3, la plaque intérieure (10) est une monobloc et comprend au moins une fente (F1, F2) adjacente à un orifice (100) de réception du rouleau (4). L'orifice (100) prolonge une fente (F1, F2) pour former la séparation (S) entre la partie (110) située du côté du bord inférieur (11) et la partie (120) de plaque intérieure située du côté du bord supérieur (12). La fente (F1, F2) est à composante essentiellement longitudinale et débouche sur l'avant ou sur l'arrière de la plaque (10). Lorsque la fente (F1, F2) s'étend sur toute la longueur de la plaque intérieure (10), on retrouve le mode de réalisation des figures 1 et 2. Dans l'exemple de la figure 3, seul une moitié de la plaque intérieure (10) est représentée. L'autre moitié peut être conçue, soit de façon analogue, soit sans fente, soit avec une partie inférieure séparable se fixant par un organe de blocage (3) à la manière du mode de réalisation de la figure 1. La plaque intérieure (10) peut ainsi comprendre une partie médiane lisse (sans fente ni orifice) interposée entre deux fentes formées chacune au niveau d'un des orifices (100) d'extrémité.

Dans l'exemple de la figure 2, deux plaques intérieures (10) sont accolées pour former un assemblage d'épaisseur (e) déterminée correspondant au double de l'épaisseur de chacune des plaques intérieures (10). Des moyens d'assemblage tels que des écrous transversaux ou autres éléments de fixation permettent d'assembler une première plaque intérieure une autre plaque intérieure identique pour former une paire de plaques intérieures (10) accolées. Cet assemblage peut recevoir deux rouleaux (4) à travers lesdits orifices (100). Au moins un des organes de blocage (3) servant à l'encastrement (E) peut être commun aux plaques intérieures (10) ainsi accolées.

Comme illustré aux figures 2 et 4, les extrémités libres (40) des rouleaux (4) sont par exemple en saillie de chaque côté par rapport aux plaques extérieures (20). En référence à la figure 4, les rouleaux (4) peuvent être en contact par leurs extrémités libres (40) avec des organes de roulement tels que des galets (6). Les galets (6) sont destinés à rouler dans un chemin (non représenté). Les extrémités (40) des rouleaux (4) permettent ainsi un roulement de la chaîne de convoyage (1) lors d'un transport d'objets.

L'organe de blocage (3) est inséré dans la plaque intérieure (10) par ledit bord inférieur (11 ). Le bord supérieur (12) permet de soutenir une charge lors d'un convoyage. Ce bord supérieur (12) est par exemple fixé à une plaque (60) de support de charge. Dans le mode de réalisation de la figure 2, la plaque intérieure (10) et la plaque (60) de support associée forment un T, tandis que les plaques extérieures (20) et la plaque (60) de support associée forment un TT (pi).

La longueur de la plaque (60) de support de charge peut être supérieure à la longueur du bord supérieur (12) mais ne doit pas, de préférence, excéder l'écartement (d) entre les axes d'articulation. Cela permet à la chaîne (1) de s'articuler sans entrave au niveau des bords des plaques (60) de support de charge. La plaque intérieure (10) peut avoir une forme générale de trapèze, avec les bords inférieur et supérieur (11, 12) parallèles entre eux. La longueur du bord inférieur (11) peut dépasser celle du bord supérieur (12). Les orifices (100) sont placés plus près du bord inférieur (11) dans l'exemple des figures 1 et 3.

Dans un mode de réalisation, les galets de roulement (6) sont bloqués en translation sur l'extrémité (40) des rouleaux (4) par exemple à l'aide de rondelles fendues traitées contre la corrosion. Ces rondelles sont encliquetées à chaque extrémité (40) du rouleau (4), par exemple dans une gorge annulaire du galet (6). Afin de diminuer les frottements, des rondelles (non représentées) en un matériau autolubrifiant peuvent être interposées sur le rouleau (4) entre le galet (6) de roulement et la partie en vis-à-vis des plaques extérieures (20).

La chaîne de convoyage (1) peut être autolubrifiante, ce qui ne nécessite aucune lubrification complémentaire et les éléments de cette chaîne de convoyage (1) sont réalisés en un matériau anticorrosion permettant son lavage par exemple au jet d'eau sous pression sans risque d'oxydation. Les rondelles peuvent être réalisées en un matériau autolubrifiant constitué par exemple d'un matériau composite comportant des fibres minérales ou organiques avec une charge solide lubrifiante.

Dans un mode de réalisation de l'invention, les composants en métal de la chaîne (1), autre que les organes de liaison, sont par exemple en acier trempé et zingué ou bien en acier inoxydable. Les rouleaux (4) et /ou les plaques intérieure (10) peuvent être en acier inoxydable à haute résistance ou en acier chromisé pour assurer une durée de vie élevée de la chaîne (1).

Pendant le fonctionnement, la répartition des forces est régulière grâce à une disposition à intervalles réguliers des galets de roulement (6) sur la longueur de la chaîne convoyage (1) selon l'invention.

Un des avantages d'une chaîne de convoyage (1) selon l'invention est d'améliorer la durée de vie grâce à la suppression du jeu entre les rouleaux et la plaque intérieure (10). Les plaques de support (60) étant soudées à la fois aux plaques extérieures (20) et à la plaque intérieure (10), une sollicitation (P, figure 2) exercée en bordure de la plaque de support (60) provoque moins de torsion entre les éléments de la chaîne (1).

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

### ANNEXE

### Références des dessins

- **1**: chaîne de convoyage
- **10**: plaque(s) intérieure(s)
- **100**: orifices transversaux
- **101**: pièce inférieure (formant une demi-plaque intérieure)
- **102**: pièce supérieure (formant l'autre demi-plaque intérieure)
- **11**: bord inférieur
- **12**: bord supérieur
- **110**: partie inférieure d'une plaque intérieure où s'exerce un serrage
- **120**: partie supérieure d'une plaque intérieure où s'exerce un serrage
- **2**: maillon
- **20**: plaque(s) extérieures(s)
- **3**: organe(s) de blocage
- **30**: évidement
- **31**: partie de l'évidement (perçage) dans la partie inférieure
- **32**: partie de l'évidement (fond) dans la partie supérieure
- **4**: rouleau(x)
- **40**: extrémité(s) libre(s) des rouleaux
- **6**: galet(s)
- **60**: plaque de support de charge (plate-forme supérieure d'une chaîne)
- **d**: écartement entre les axes d'articulation
- **e**: épaisseur de plaque(s) intérieure(s) dans un maillon
- **E**: encastrement
- **F1**: fente adjacente à un orifice
- **F2**: fente adjacente à un orifice
- **P**: sollicitation
- **P1**: plan longitudinal
- **S**: séparation dans une plaque intérieure
- **X**: axe orthogonal aux orifices

## Revendications

1. Plaque intérieure (10) d'un maillon de chaîne, comprenant un bord inférieur (11), deux orifices (100) transversaux dits avant et arrière, parallèles entre eux, pour laisser passer chacun un rouleau (4) traversant de part et d'autre ladite plaque et un bord supérieur (12), **caractérisée en ce qu'**au moins un desdits orifices (100) prolonge une fente (F1, F2) selon un axe (X) qui est orthogonal aux orifices (100) pour former une séparation (S) entre une partie (110) de plaque intérieure située du côté du bord inférieur (11) et une partie (120) de plaque intérieure (10) située du côté du bord supérieur (12), elle comporte des moyens d'encastrement (3, F1, 100, F2) d'au moins un des rouleaux (4), ces moyens d'encastrement (3, F1, 100, F2) incluant au moins un organe de blocage (3) à composante perpendiculaire par rapport audit axe (X) pour exercer une action de resserrement desdites deux parties (110, 120) de la plaque intérieure (10) autour du ou des rouleau(x).

2. Plaque intérieure selon la revendication 1, dans laquelle ledit axe (X) orthogonal aux orifices (100) est longitudinal et joint fictivement les deux orifices (100).

3. Plaque intérieure selon la revendication 1 ou 2, dans laquelle l'organe de blocage (3) est inséré dans la plaque intérieure (10) par ledit bord inférieur (11), le bord supérieur (12) étant fixé à une plaque (60) de support de charge.

4. Plaque intérieure selon la revendication 1, dans laquelle la fente (F1, F2) est à composante essentiellement longitudinale et débouche sur l'avant et/ou sur l'arrière de la plaque (10).

5. Plaque intérieure selon une des revendications 1 à 4, **caractérisée en ce qu'**elle se décompose en deux parties (101, 102) reliées entre elles par deux organes de blocage (3).

6. Plaque intérieure selon la revendication 5, dans laquelle les deux parties (101, 102) se rejoignent l'une et l'autre selon un plan parallèle aux orifices (100).

7. Plaque intérieure selon la revendication 5 ou 6, dans laquelle chaque organe de blocage (3) est reçu dans un évidement (30) se décomposant en un perçage (31) situé dans la partie (110) inférieure et un fond (32) formé par un trou borgne de la partie (120) supérieure, chacun des évidements (30) étant prévu dans une zone située entre les deux orifices (100).

8. Plaque intérieure selon la revendication 3, dans laquelle la plaque (60) de support de charge est perpendiculaire à la plaque intérieure (10) et s'étend en largeur d'une dimension supérieure à l'épaisseur (e) de la plaque intérieure (10).

9. Plaque intérieure selon une des revendications 1 à 8, comprenant des moyens d'assemblage avec une autre plaque intérieure identique pour former une paire de plaques intérieures (10) accolées recevant deux rouleaux (4) à travers lesdits orifices (100).

10. Chaîne de convoyage (1), comprenant une succession de maillons (2) comprenant chacun des plaques (10, 20) s'étendant parallèlement à un plan (P1) dit longitudinal, chaque maillon (2) comprenant au moins une plaque intérieure (10) selon les revendications 1 à 10 et deux plaques extérieures (20) articulées par rapport à la plaque intérieure (10) suivant le plan (P1) longitudinal par l'intermédiaire de rouleaux (4), chacune des plaques extérieures (20) étant mobile en rotation par rapport aux rouleaux (4).

11. Chaîne de convoyage selon la revendication 10, dans laquelle les rouleaux (4) sont solidaires par leurs extrémités libres (40) avec des organes de roulement (6) disposés de part et d'autre des plaques extérieures (20).

12. Procédé de fabrication d'un maillon (2) d'une chaîne de convoyage (1), comprenant une étape d'assemblage entre une plaque intérieure (10) selon les revendications 1 à 10, deux plaques extérieures (20) et deux rouleaux (4), **caractérisé en ce que** l'étape d'assemblage comprend une étape d'insertion des rouleaux (4) dans des orifices (100) transversaux de la plaque intérieure (10) suivie d'une étape (E) d'encastrement desdits rouleaux (4), dans laquelle une partie (110) inférieure de la plaque intérieure (10) et une partie (120) supérieure de la plaque intérieure (10) séparées entre elles sont resserrées autour d'au moins un des rouleaux (4), par utilisation d'au moins une liaison interne dans la plaque intérieure (10).

13. Utilisation dans une chaîne de plaques intérieures (10) selon les revendications 1 à 9 à serrage sur l'axe de chaque rouleau d'une paire de rouleaux (4) disposés à chaque extrémité de la plaque intérieure (10) et réalisant une liaison articulée entre une plaque intérieure (10) et deux éléments extérieurs de maillon montés chacun à jeu sur un des rouleaux (4), le serrage permettant à chacun des rouleaux (4) d'être encastré au niveau d'une des extrémités de la plaque intérieure (10).

14. Utilisation selon la revendication 13, dans laquelle lesdites plaques intérieures (10) sont reliées chacune à deux plaques extérieures (20) au niveau de perçages sur les extrémités des plaques extérieures (20).

15. Utilisation selon la revendication 13, dans laquelle deux plaques intérieures adjacentes sont assemblées et serrent chacune une paire de rouleaux (4), les deux plaques intérieures adjacentes étant intercalées entre les deux éléments extérieurs de maillon.

## Claims

1. Inner plate (10) of a chain link, comprising a lower edge (11), two so-called front and rear transverse orifices (100) which are parallel to one another, each enabling the passage of a roller (4) from one side to the other of the said plate, and an upper edge (12), **characterised in that** at least one of the said orifices (100) extends a slot (F1, F2) along an axis (X) which is orthogonal with respect to the orifices (100) in order to form a separation (S) between an inner plate part (110) situated on the side of the lower edge (11) and an inner plate (10) part (120) situated on the side of the upper edge (12), including means for housing (3, F1, 100, F2) of at least one of the rollers (4), these housing means (3, F1, 100, F2) including at least one locking element (3) having a component perpendicular with respect to the said axis (X) in order to carry out an action of tightening the said two parts (112, 120) of the inner plate (10) around the roller(s).

2. Inner plate as claimed in Claim 1, wherein the said axis (X) which is orthogonal with respect to the orifices (100) is longitudinal and notionally joins the two orifices (100).

3. Inner plate as claimed in Claim 1 or Claim 2, wherein the locking element (3) is inserted into the inner plate (10) via the said lower edge (11), the upper edge (12) being fixed to a load support plate (60).

4. Inner plate as claimed in Claim 1, wherein the slot (F1, F2) has a substantially longitudinal component and opens onto the front and/or the rear of the plate (10).

5. Inner plate as claimed in any one of Claims 1 to 4, **characterised in that** it is composed of two parts (101, 102) connected to one another by two locking elements (3).

6. Inner plate as claimed in Claim 5, wherein the two parts (101, 102) are joined to one another in a plane parallel to the orifices (100).

7. Inner plate as claimed in Claim 5 or Claim 6, wherein each locking element (3) is received in a recess (30) composed of a bore (31) situated in the lower part (110) and a base (32) formed by a blind hole of the upper part (120), each of the recesses (30) being provided in a zone situated between the two orifices (100).

8. Inner plate as claimed in Claim 3, wherein the load support plate (60) is perpendicular to the inner plate (10) and extends in width by a dimension greater than the thickness (e) of the inner plate (10).

9. Inner plate as claimed in any one of Claims 1 to 8, comprising means for assembly with another identical inner plate in order to form a pair of attached inner plates (10) which receive two rollers (4) through the said orifices (100).

10. Conveyor chain (1), comprising a succession of links (2) each comprising plates (10, 20) which extend parallel to a so-called longitudinal plane (PI), each links (2) comprising at least one inner plate (10) as claimed in Claims 1 to 10 and two outer plates (20) articulated with respect to the inner plate (10) in the longitudinal plane (PI) by means of rollers (4), each of the outer plates (20) being movable in rotation with respect to the rollers (4).

11. Conveyor chain as claimed in Claim 10, wherein the rollers are joined by their free ends (40) to rolling elements (6) disposed on either side of the outer plates (20).

12. Method of manufacture of a link (2) of a conveyor chain (1), comprising a step of assembly between an inner plate (10) as claimed in Claims 1 to 10, two outer plates (20) and two rollers (4), **characterised in that** the step of assembly comprises a step of insertion of the rollers (4) in transverse orifices (100) of the inner plate (10) followed by a step (E) of housing the said rollers (4), wherein a lower part (110) of the inner plate (10) and an upper part (120) of he inner plate (10) which are separated from one another are tightened around at least one of the rollers (4), by use of at least one inner connection in the inner plate (10).

13. Use in a chain of inner plates (10) as claimed in Claims 1 to 9 with locking on the spindle of each roller of a pair of rollers (4) disposed at each end of the inner plate (10) and providing an articulated connection between an inner plate (10) and two outer link elements each mounted with a clearance on one of the rollers (4), the locking enabling each of the rollers (4) to be housed at one of the ends of the inner plate (10).

14. Use as claimed in Claim 13, wherein the said inner plates (10) are each connected to two outer plates (20) in the region of holes on the ends of the outer plates (20).

15. Use as claimed in Claim 13, wherein two adjacent inner plates are assembled and each lock a pair of rollers (4), the two adjacent inner plates being interposed between the two outer link elements.

## Patentansprüche

1. Innenplatte (10) eines Kettengliedes, aufweisend einen unteren Rand (11), zwei Queröffnungen (100), die als vordere und hintere Queröffnung bezeichnet werden, die parallel zueinander sind, so dass jede eine Rolle (4) durchlassen kann, die die Platte auf beiden Seiten durchquert, und einen oberen Rand (12), **dadurch gekennzeichnet, dass** mindestens eine der Öffnungen (100) einen Schlitz (F1, F2) entlang einer Achse (X) verlängert, die orthogonal zu den Öffnungen (100) ist, um eine Trennung (S) zwischen einem Abschnitt (110) der Innenplatte, der auf Seiten des unteren Randes (11) positioniert ist, und einem Abschnitt (120) der Innenplatte (10), der auf Seiten des oberen Randes (12) positioniert ist, zu bilden, sie Mittel zum Einbauen (3, F1, 100, F2) mindestens einer der Rollen (4) aufweist, wobei die Einbaumittel (3, F1, 100, F2) mindestens ein Blockiermittel (3) mit zu der Achse (X) senkrechter Komponente zum Ausführen einer Aktion des Zusammenziehens der beiden Abschnitte (110, 120) der Innenplatte (10) um die Rolle(n) aufweisen.

2. Innenplatte gemäß Anspruch 1, wobei die zu den Öffnungen (100) orthogonale Achse (X) längs verläuft und die beiden Öffnungen (100) fiktiv miteinander verbindet.

3. Innenplatte gemäß Anspruch 1 oder 2, wobei das Blockiermittel (3) durch den unteren Rand (11) in die Innenplatte (10) eingesetzt ist, wobei der obere Rand (12) an einer Last-Stützplatte (60) befestigt ist.

4. Innenplatte gemäß Anspruch 1, wobei der Schlitz (F1, F2) eine im Wesentlichen längsverlaufende Komponente aufweist und an dem vorderen Ende und/oder dem hinteren Ende der Platte (10) mündet.

5. Innenplatte gemäß einem der Ansprüche 1 bis 4, **dadurch gekennzeichnet, dass** sie in zwei Abschnitte (101, 102) aufgetrennt ist, die durch zwei Blockiermittel (3) miteinander verbunden sind.

6. Innenplatte gemäß Anspruch 5, wobei die beiden Abschnitte (101, 102) entlang einer Ebene parallel zu den Öffnungen (100) wieder zusammentreffen.

7. Innenplatte gemäß Anspruch 5 oder 6, wobei jedes Blockiermittel (3) in einer Aussparung (30) aufgenommen ist, die in eine Bohrung (31), die in dem unteren Abschnitt (110) positioniert ist, und einen Boden (32), der von einem Blindloch des oberen Abschnitts (120) gebildet wird, aufgeteilt ist, wobei jede der Aussparungen (30) in einem Bereich zwischen den beiden Öffnungen (100) vorgesehen ist.

8. Innenplatte gemäß Anspruch 3, wobei die Last-Stützplatte (60) senkrecht zu der Innen platte (10) ist und sich in der Breite nach um ein Maß erstreckt, das größer als die Dicke (e) der Innenplatte (10) ist.

9. Innenplatte gemäß einem der Ansprüche 1 bis 8, die Mittel zum Zusammenbauen mit einer anderen identischen Innenplatte aufweist, um ein Paar von aneinandergefügten Innenplatte (10) zu bilden, die durch die Öffnungen (100) hindurch zwei Rollen (4) aufnehmen.

10. Förderkette (1), die eine Folge von Kettengliedern (2) aufweist, die jeweils Platten (10, 20) aufweisen, die sich parallel zu einer als längsverlaufend bezeichneten Ebene (P1) erstrecken, wobei jedes Glied (2) mindestens eine Innenplatte (10) gemäß den Ansprüchen 1 bis 9 und zwei Außenplatten (20) aufweist, die relativ zu der unteren Platte (10) entlang der längsverlaufenden Ebene (P1) durch Rollen (4) gelenkig gelagert sind, wobei jede der Außenplatten (20) relativ zu den Rollen (4) drehend bewegbar ist.

11. Förderkette gemäß Anspruch 10, wobei die Rollen (4) durch ihre freien Enden (40) einstückig mit Rollmitteln (6) sind, die auf beiden Seiten der Außenplatten (20) angeordnet sind.

12. Verfahren zum Herstellen eines Gliedes (2) einer Förderkette (1), das aufweist: einen Schritt des Montierens einer Innenplatte (10) gemäß den Ansprüchen 1 bis 9, zwischen zwei Außenplatten (20) und zwei Rollen (4), **dadurch gekennzeichnet, dass** der Schritt des Montierens einen Schritt des Einsetzens der Rollen (4) in Queröffnungen (100) der Innenplatte (10), gefolgt von einem Schritt (E) des Einbauens der Rollen (4) aufweist, wobei ein unterer Abschnitt (110) der Innenplatte (10) und ein oberer Abschnitt (120) der Innenplatte (10), die voneinander getrennt sind, um mindestens eine der Rollen (4) unter Verwendung mindestens einer inneren Verbindung in der Innenplatte (10) festgezogen werden.

13. Anwendung von Innenplatten (10) in einer Kette gemäß den Ansprüchen 1 bis 9 zum Festspannen auf der Achse jeder Rolle eines Rollenpaares (4), die an jedem Ende der Innenplatte (10) angeordnet sind und eine gelenkige Verbindung zwischen einer Innenplatte (10) und zwei äußeren Gliedelementen realisieren, die jeweils mit Spiel auf einer der Rollen (4) montiert sind, wobei das Festspannen ermöglicht, dass jede der Rollen (4) auf Höhe eines der Enden der Innenplatte (10) eingebaut wird.

14. Anwendung gemäß Anspruch 13, wobei die Innenplatten (10) jeweils an zwei Außenplatte (20) auf Höhe von Bohrungen an den Enden der Außenplatten (20) angeschlossen sind.

15. Anwendung gemäß Anspruch 13, wobei zwei benachbarte Innenplatten zusammengefügt sind und jeweils ein Paar von Rollen (4) festspannen, wobei die beiden benachbarten Innenplatten zwischen den beiden äußeren Kettenelementen eingefügt sind.
